(19)

**Europäisches Patentamt**
**European Patent Office**
**Office européen des brevets**

(11) **EP 3 211 052 B1**

(12) **EUROPEAN PATENT SPECIFICATION**

(45) Date of publication and mention
of the grant of the patent:
**12.06.2019 Bulletin 2019/24**

(51) Int Cl.:
*C09J 133/08* (2006.01)    *C09J 7/00* (2018.01)
*C09J 5/00* (2006.01)    *C09J 11/06* (2006.01)
*B32B 7/12* (2006.01)    *E04G 23/02* (2006.01)

(21) Application number: **15853313.3**

(22) Date of filing: **16.10.2015**

(86) International application number:
**PCT/JP2015/079283**

(87) International publication number:
**WO 2016/063802 (28.04.2016 Gazette 2016/17)**

(54) **TACKY GEL SHEET HAVING ADHESIVE APPLICATIONS, METHOD FOR PRODUCING SAME, METHOD FOR FIXING A PAIR OF OBJECTS, AND COMPOSITE MATERIAL**

KLEBRIGE GELFOLIE MIT KLEBSTOFFANWENDUNGEN, VERFAHREN ZUR HERSTELLUNG DAVON, VERFAHREN ZUR FIXIERUNG EINES OBJEKTPAARES UND VERBUNDSTOFFMATERIAL

FEUILLE DE GEL ADHÉSIF PRÉSENTANT DES APPLICATIONS ADHÉSIVES, SON PROCÉDÉ DE PRODUCTION, PROCÉDÉ PERMETTANT DE FIXER UNE PAIRE D'OBJETS ET MATÉRIAU COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2014 JP 2014213866**
**02.03.2015 JP 2015040622**

(43) Date of publication of application:
**30.08.2017 Bulletin 2017/35**

(73) Proprietor: **Sekisui Plastics Co., Ltd.**
**Osaka-shi,**
**Osaka 530-0047 (JP)**

(72) Inventors:
• **OKAMOTO, Koichiro**
**Tenri-shi**
**Nara 632-0007 (JP)**
• **MAEYAMA, Yousuke**
**Inashiki-gun**
**Ibaraki 300-0421 (JP)**
• **SASAHARA, Shuichi**
**Tenri-shi**
**Nara 632-0007 (JP)**

• **IIZUKA, Ryo**
**Tenri-shi**
**Nara 632-0007 (JP)**

(74) Representative: **Hoffmann Eitle**
**Patent- und Rechtsanwälte PartmbB**
**Arabellastraße 30**
**81925 München (DE)**

(56) References cited:
**WO-A1-97/00923    WO-A1-2014/103040**
**JP-A- H 072 978    JP-A- H02 272 076**
**JP-A- H08 165 459    JP-A- H10 120 993**
**JP-A- H10 120 994    JP-A- H11 508 301**
**JP-A- S60 173 076    JP-A- S63 193 980**
**JP-A- 2011 503 811**

• **DATABASE WPI Week 199743 Thomson Scientific, London, GB; AN 1997-466308 XP002780561, & JP H09 217040 A (SEKISUI CHEM IND CO LTD) 19 August 1997 (1997-08-19)**

EP 3 211 052 B1

**EP 3 211 052 B1**

**Description**

TECHNICAL FIELD

The present invention relates to a tacky gel sheet having adhesive applications, method for producing same, method for fixing a pair of objects, and composite material (a tacky gel sheet having adhesive uses, a method for manufacturing the same, a method for fixing a pair of adherends, and a composite material). More particularly, the present invention relates to a tacky gel sheet having adhesive uses, which can be temporarily fixed to an adherend utilizing a tacking force, and then, can be fixed to the adherend utilizing an adhering force due to curing, a method for manufacturing the same, a method for fixing a pair of adherends, and a composite material.

BACKGROUND TECHNOLOGY

For example, in structures such as a bridge and a tunnel which have been molded with the concrete, a crack is generated, with repetition of the external force such as vibration over passage of years, freezing and thawing of flooded rain water or the like, salt damage, or corrosion of the reinforcing steel bar due to a neutralization reaction or the like, and this crack has hitherto become the cause of obsolescence. The crack has been repaired by formation of a protective layer or the like by means of injection a repairing agent, coating or the like. Additionally, repairing of the reinforcing steel bar has been performed by a method of formation of a protective layer by coating, electric anticorrosion or the like.

When the crack has been generated, and the concrete may be peeled, or may be dropped as a result of peeling, repairing is performed as follows. That is, first, a surface of the concrete is cleaned up, and then, depending on a degree of deterioration in the concrete, treatment with an impregnating material, a steel frame rust preventive material, a cross section repairing material, a crack injecting material or the like is performed as necessary. Specifically, after coating of an undercoating material, smoothing treatment as primary finishing is performed using a backing conditioner such as putty. Then, a treated portion is subjected to secondary finishing. Secondary finishing is, for example, treatment of covering a surface with various paints, a construction finish coating material, a coated film waterproofing material, a molded plate or the like as a surface covering material, or coating an adhesive on a treated portion, applying a woven fabric, a non-woven fabric or a knitted fabric of a reinforced fiber for repairment or reinforcement thereon, further coating an adhesive to grout the reinforced fiber, coating again an undercoating material after drying and solidification, and coating a paint having weather resistance thereon. In Japanese Unexamined Patent Application, First Publication No. Hei 8-218646 (Patent Document 1), there is exemplified a method of performing primary finishing by uniformly coating a primer or an adhesive on a surface of a concrete structure, and performing secondary finishing by adhering a reinforced fiber tape, thereby, reinforcing the concrete structure.

In secondary finishing, as the adhesive, an epoxy-based, rubber-based or other-based adhesive is used, and as a paint, a paint containing, as a base resin, an acryl-based resin, a urethane-based resin, a fluorine-based resin or the like is used. As the construction finishing material, cement, a siliceous material, an acrylic resin, and the like are used, as the molded plate, a steel plate, an aluminum plate, a PIC plate, and the like are used, as a fiber constituting a woven fabric, a knitted fabric, a non-woven fabric, a laminated fabric or the like, for example, a polyester fiber, a polyamide fiber, an aramid fiber, a vinylon fiber, a carbon fiber, a glass fiber, a polyolefin fiber, and the like are used.

In Japanese Unexamined Patent Application, First Publication No. Hei 9-158495 (Patent Document 2), there is exemplified a construction method of reinforcement by applying a resin-impregnated sheet in which a carbon fiber sheet has been impregnated with a thermosetting epoxy resin containing a latent heat-curing agent, to a reinforced concrete structure, followed by heating.

Patent Document 3 relates to a heat curable adhesive bonding film comprising: a) a heat curable aromatic polyepoxide; b) a heat activated curative for the polyepoxide; c) a thermoplastic polymer; and d) a polyfunctional (meth)acrylate.

PRIOR ART DOCUMENTS

Patent Documents

Patent Document 1: Japanese Unexamined Patent Application, First Publication No. Hei 8-218646
Patent Document 2: Japanese Unexamined Patent Application, First Publication No. Hei 9-158495
Patent Document 3: WO 97/00923

SUMMARY OF THE INVENTION

PROBLEM TO BE SOLVED BY THE INVENTION

In Patent Document 1, the above-described repairing work is basically high-place work, and since coating is performed by hand lay-up, the work was hard. Additionally, in hand lay-up, the construction period also becomes long, and as a result, the construction cost was increased. In addition, quality control may be difficult depending on the condition of the construction site, and excessive specification design may have been required in order to secure predetermined quality. For this reason, development of a repairing member which can realize shortening of the construction period, reduction in the construction cost, and suitable specification design by reducing a workload has been demanded.

Additionally, in the construction method of Patent Document 2, it is predicted that a curing reaction of the resin-impregnated sheet becomes faster than use of a cold setting-type curing agent, and execution work efficiency is enhanced. Since a cured product of a thermosetting epoxy resin containing a latent heat-curing agent, however, has the high storage modulus, contraction and warpage are caused at curing of the epoxy resin, and there was a problem that adhesion durability is deteriorated due to intrusion of rain water into an adhesion interface or reduction in the anchoring effect. Additionally, there was a problem that the epoxy resin which was impregnated into a fiber sheet causes resin sagging due to reduction in the viscosity at heat curing.

MEANS FOR SOLVING THE PROBLEM

Thus, the present invention provides a tacky gel sheet having adhesive uses, comprising an organogel having tackiness before curing and having adhesiveness after curing to an adherend, wherein the organogel

(i) comprises a polymer matrix including a (meth)acrylate-based resin, a plasticizing component having curability, and a curing agent having reactivity with the plasticizing component, and

(ii) (1) has a viscoelastic property expressed by a tensile storage modulus of $1.0 \times 10^3$ to $5.0 \times 10^4$ Pa and a loss factor of 0.01 to 2 (at a frequency of 0.01 Hz and at 23°C), and a storage modulus of $1.0 \times 10^4$ to $1.0 \times 10^7$ Pa and a loss factor of 0.01 to 2 (at a frequency of 100 Hz and at 23°C) and (2) has a tacking force of 0.01 to 0.15 N/mm$^2$ (at 23°C) before curing, a tensile shear adhesion strength of 3 N/mm$^2$ or more (at 23°C) and a tensile adhesion strength of 1 N/mm$^2$ or more (at 23°C) after curing,

wherein said plasticizing component comprises a liquid epoxy-based resin having a viscosity in a range of 500 to 30,000 mPa·s at a temperature of 25°C (JIS K 7117-1, 1999) and having a benzene skeleton, and wherein said liquid epoxy-based resin having a benzene skeleton has a plurality of epoxy groups, and said plasticizing component further comprises one or both of (1) an aliphatic polyfunctional liquid epoxy-based resin having a viscosity in a range of 1 to 10,000 mPa·s at a temperature of 25° and having a plurality of epoxy groups, and (2) a monofunctional liquid epoxy-based resin having a viscosity in a range of 1 to 10,000 mPa·s at a temperature of 25°C and having one epoxy group.

Also, the present invention provides a method for manufacturing the above-described tacky gel sheet, the method comprising the steps of:

molding into a sheet-like shape a polymerizable composition comprising a monomer mixture including a monofunctional (meth)acrylate monomer and a polyfunctional (meth)acrylate monomer for forming the polymer matrix, a polymerization initiator, a plasticizing component having curability, and a curing agent having reactivity with the plasticizing component; and
polymerizing the monomer mixture in the polymerizable composition with the polymerization initiator.

Furthermore, the present invention provides a method for fixing a pair of adherends, the method comprising the steps of:

temporarily fixing a pair of adherends by tackily adhering the pair of adherends and the tacky gel sheet; and
fixing the pair of adherends by curing the tacky gel sheet through heating the tacky gel sheet before tacky adhesion or after tacky adhesion of the tacky gel sheet.

Additionally, the present invention provides a composite material comprising a pair of adherends and an adhesive layer positioned between the pair of adherends, wherein the adhesive layer is derived from the tacky gel sheet.

EFFECTS OF INVENTION

According to the tacky gel sheet of the present invention, shortening of the construction period, reduction in the construction cost, and suitable specification design can be realized by reducing a workload.

Additionally, in the case of any one or a combination of the followings, a workload can be further reduced, as well as shortening of the construction period, reduction in the construction cost, and suitable specification design can be further realized.

(1) The case where the plasticizing component comprises a liquid epoxy-based resin having a viscosity in a range of 500 to 30,000 mPa·s at a temperature of 25°C and having a benzene skeleton.
(2) The case where the curing agent is a latent curing agent for epoxy resin.
(3) The case where the (meth)acrylate-based resin has a benzene skeleton.
(4) The case where the polymer matrix is contained at 10 to 30 parts by weight based on 100 parts by weight of the plasticizing component.
(5) The case where the tacky gel sheet comprises the organogel having a thickness of 0.5 to 5 mm and a reinforced fiber sheet positioned in the organogel or on a surface of the organogel.
(6) The case where the adherend is a concrete structure.
(7) The case where the organogel further has a glass transition temperature of 40 to 90°C and a tensile storage elastic modulus of $1.0 \times 10^7$ to $4.0 \times$ Pa (at 180°C) after curing.
(8) The case where the liquid epoxy-based resin having a benzene skeleton has a plurality of epoxy groups, and the plasticizing component further comprises one or both of (1) an aliphatic polyfunctional liquid epoxy-based resin having a viscosity in a range of 1 to 10,000 mPa·s at a temperature of 25°C and having a plurality of epoxy groups, and (2) a monofunctional liquid epoxy-based resin having a viscosity in a range of 1 to 10,000 mPa·s at a temperature of 25°C and having one epoxy group.
(9) The case where the aliphatic polyfunctional liquid epoxy-based resin is contained in the plasticizing component at 5 to 25% by weight.
(10) The case where the monofunctional liquid epoxy-based resin is contained in the plasticizing component at 5 to 25% by weight.

Furthermore, when the monomer mixture exhibits an SP value in a range of 9.5 to 11.5 $[(cal/cm^3)^{1/2}]$, the above-described tacky gel sheet can be easily manufactured.

Additionally, when a pair of adherends are a steel plate and a concrete structure, a workload can be further reduced, as well as shortening of the construction period, reduction in the construction cost, and suitable specification design can be further realized.

BEST MODE FOR CARRYING OUT THE INVENTION

The tacky gel sheet having adhesive uses, the method for manufacturing the same, the method for fixing a pair of adherends, and the composite material of the present invention will be explained in detail below. The present invention is not limited by the following explanation, and can be variously modified in the range of the gist thereof.

(Tacky Gel Sheet)

A tacky gel sheet (hereinafter, referred to as gel sheet) includes an organogel having tackiness (tacking force) before curing, and having adhesiveness (adhering force) after curing, to an adherend. By including this organogel, a gel sheet which can be temporarily fixed to an adherend utilizing a tacking force, and then, can be adhered to the adherend utilizing an adhering force due to curing can be realized.

The gel sheet is used for adhering an adherend in structures such as a building, a vehicle, and a ship. Specifically, the gel sheet can adhere firm between metals, between a metal and a synthetic resin sheet (or a film or a molded article), between a metal and a concrete, between a concrete and a resin sheet, or between concretes. Herein, tackiness having adhesive uses is defined as "having a tacking force and being applicable at an ambient temperature before curing, and being crosslinked and cured by impartation of heat, light or the like, to increase the adhesion strength". In addition, in the present specification, an ambient temperature means 23°C $\pm$ 2°C.

The organogel:

(i) includes a polymer matrix including a (meth)acrylate-based resin, a plasticizing component having curability, and a curing agent having reactivity with this plasticizing component,
(ii) (1) has a viscoelastic property expressed by a tensile storage modulus of $1.0 \times 10^3$ to $5.0 \times 10^4$ Pa and a loss factor of 0.01 to 2 (at a frequency of 0.01 Hz and at 23°C), and a storage modulus of $1.0 \times 10^4$ to $1.0 \times 10^7$ Pa and a loss factor of 0.01 to 2 (at a frequency of 100 Hz and at 23°C) and (2) has a tacking force of 0.01 to 0.15 N/mm$^2$ (at 23°C) before curing, a tensile shear adhesion strength of 3 N/mm$^2$ or more (at 23°C) and a tensile adhesion strength of 1 N/mm$^2$ or more (at 23°C) after curing,

wherein said plasticizing component comprises a liquid epoxy-based resin having a viscosity in a range of 500 to 30,000 mPa·s at a temperature of 25°C (JIS K 7117-1, 1999) and having a benzene skeleton, and wherein said liquid epoxy-based resin having a benzene skeleton has a plurality of epoxy groups, and said plasticizing component further comprises one or both of (1) an aliphatic polyfunctional liquid epoxy-based resin having a viscosity in a range of 1 to 10,000 mPa·s at a temperature of 25°C and having a plurality of epoxy groups, and (2) a monofunctional liquid epoxy-based resin having a viscosity in a range of 1 to 10,000 mPa·s at a temperature of 25°C and having one epoxy group.

(1) Various Physical Properties

An example of a gel-like form includes a form having physical properties, in which in values of the storage modulus and the loss factor measured at 23°C, the storage modulus is $1.0 \times 10^3$ to $5.0 \times 10^4$ Pa and the loss factor is 0.01 to 2 at a frequency of 0.01 Hz, and the storage modulus is $1.0 \times 10^4$ to $1.0 \times 10^7$ Pa and the loss factor is 0.01 to 2 at a frequency of 100 Hz. The storage modulus and the loss factor are collectively referred to as a viscoelastic property.

The above-described viscoelastic property is assessment of adherence, in which the gel sheet enters irregularities of a surface of an adherend such as a concrete structure to adhere therebetween, and shows an area of the gel sheet to be contacted with an adherend, or deformability of the gel sheet itself. Additionally, viscoelastic property also becomes an assessment value of a cohesive force, that is, the breakage resistance strength of the gel sheet.

The viscoelastic property at 0.01 Hz (low frequency region) becomes an index of a wet tacking force, creep behavior (plastic deformation), of the gel sheet at a process of fine deformation at a low rate. For example, when applied to an adherend, if the storage modulus at 0.01 Hz is too high, or the loss factor at 0.01 Hz is too low, the gel sheet cannot be deformed well, and adherence may be reduced. On the other hand, conversely, if the storage modulus is too low, or the loss factor is too high, cohesiveness of the gel sheet is deteriorated, and shape retainability may be deteriorated.

The viscoelastic property at 100 Hz (high frequency region) becomes an index of followability to an adherend, peeling behavior, and the like of the gel sheet at a process of deformation at a high rate. For example, when applied to an adherend, if the storage modulus at 100 Hz is too high, or the loss factor at 100 Hz is too low, the gel sheet cannot follow vibration or the like due to passage of a vehicle or the like, and peeling becomes easy to occur. On the other hand, conversely, if the storage modulus is too low, or the loss factor is too high, re-application to an adherend may be difficult.

In addition, it is more preferable that the storage modulus is $1.0 \times 10^3$ to $5.0 \times 10^4$ Pa and the loss factor is 0.01 to 2 at a frequency of 0.01 Hz, and the storage modulus is $1.0 \times 10^4$ to $1.0 \times 10^7$ Pa and the loss factor is 0.01 to 2 at a frequency of 100 Hz. The storage modulus at a frequency of 0.01 Hz can take $1.0 \times 10^3$ Pa, $3.0 \times 10^3$ Pa, $5.0 \times 10^3$ Pa, $8.0 \times 10^3$ Pa, $1.0 \times 10^4$ Pa, $3.0 \times 10^4$ Pa, and $5.0 \times 10^4$ Pa. The loss factor at a frequency of 0.01 Hz can take 0.01, 0.1, 0.5, 1, 1.5, and 2. The storage modulus at a frequency of 100 Hz can take $1.0 \times 10^4$ Pa, $5.0 \times 10^4$ Pa, $1.0 \times 10^5$ Pa, $5.0 \times 10^5$ Pa, $1.0 \times 10^6$ Pa, $5.0 \times 10^6$ Pa, and $1.0 \times$ Pa. The loss factor at a frequency of 100 Hz can take 0.01, 0.1, 0.5, 1, 1.5, and 2.

Additionally, it is preferable that a minimum value of the storage modulus when a temperature is raised from 23°C to 120°C at 5°C/min is in the range of $1.0 \times 10^1$ Pa to $1.0 \times 10^3$ Pa. The tacky gel sheet having this minimum value manifests such adherence that it enters irregularities of an adherend surface at curing to perform adhesion, and can fix adherends more firmly to each other. The minimum value can take $1.0 \times 10^1$ Pa, $4.0 \times 10^1$ Pa, $7.0 \times 10^1$ Pa, $1.0 \times 10^2$ Pa, $4.0 \times 10^2$ Pa, $7.0 \times 10^2$ Pa, and $1.0 \times 10^3$ Pa. The more preferable minimum value is $1.0 \times 10^1$ to $1.0 \times 10^2$ Pa. It is preferable that this minimum value is shown in the range of 50 to 120°C.

A predetermined tacking force is a force which can maintain the state where the gel sheet is stuck to an adherend. It is preferable that a tacking force is 0.01 to 0.15 N/mm$^2$. When a tacking force is less than 0.01 N/mm$^2$, a tacking force to an adherend may be insufficient. When a tacking force is higher than 0.15 N/mm$^2$, a tacking force may be too strong and workability may be deteriorated. A tacking force can take 0.01 N/mm$^2$, 0.05 N/mm$^2$, 0.07 N/mm$^2$, 0.1 N/mm$^2$, 0.12 N/mm$^2$. and 0.15 N/mm$^2$. A more preferable tacking force is 0.05 to 0.15 N/mm$^2$.

A predetermined adhering force is a force which can maintain the state where the gel sheet is adhered to an adherend, after curing of the gel sheet. It is preferable that an adhering force is 3 N/mm$^2$ or more, when expressed by the tensile shear adhesion strength. When the adhering force is less than 3 N/mm$^2$, an adhering force to an adherend is reduced, and load bearing capacity may be deficient. The tensile shear adhesion strength can take 3 N/mm$^2$, 5 N/mm$^2$, 10 N/mm$^2$, 20 N/mm$^2$, 30 N/mm$^2$, 40 N/mm$^2$, and 50 N/mm$^2$. The more preferable tensile shear adhesion strength is 5 to 20 N/mm$^2$.

Additionally, it is preferable that an adhering force is 1 N/mm$^2$ or more, when expressed by the tensile adhesion strength. When the adhering force is less than 1 N/mm$^2$, the adhering force to an adherend is reduced, and load bearing capacity may be deficient. This adhering force has no upper limit, and higher is more preferable. The tensile adhesion strength can take 1 N/mm$^2$, 3 N/mm$^2$, 5 N/mm$^2$, 10 N/mm$^2$. 20 N/mm$^2$, 30 N/mm$^2$, 40 N/mm$^2$, and 50 N/mm$^2$.

The thickness of the gel sheet is not particularly limited, as long as it is such thickness that a shape of the sheet can be maintained during operation. For example, the thickness is 0.5 to 5 mm. The thickness can take 0.5 mm, 1 mm, 1.5 mm, 2 mm, 2.5 mm, 3 mm, 3.5 mm, 4 mm, 4.5 mm, and 5 mm.

It is preferable that the organogel further has a glass transition temperature of 40 to 90°C and a tensile storage elastic modulus of $1.0 \times 10^7$ to $4.0 \times 10^7$ Pa (at 180°C), after curing. Since by having a glass transition temperature and the tensile storage elastic modulus in this range, it is possible to suppress contraction at curing and also maintain the sufficient adhesion strength after curing, adhesion durability can be improved. Additionally, since this organogel has stable shape retainability in a wide temperature region, resin sagging is not caused and workability can be improved.

When the glass transition temperature is lower than 40°C, the adhesion strength may be reduced due to reduction in the elastic modulus at an ambient temperature. When the glass transition temperature is higher than 90°C, contraction due to a thermal stress becomes great, and adhesion durability may be deteriorated. The glass transition temperature can take 40°C, 50°C, 60°C, 70°C, 80°C, and 90°C. It is more preferable that the glass transition temperature is 55 to 75°C.

When the tensile storage elastic modulus is less than $1.0 \times 10^7$ Pa, the adhesion strength may be reduced. When the tensile storage elastic modulus is higher than $4.0 \times 10^7$ Pa, contraction due to a thermal stress becomes large, and adhesion durability may be deteriorated. The tensile storage elastic modulus can take $1.0 \times 10^7$ Pa, $1.5 \times 10^7$ Pa, $2.0 \times 10^7$ Pa, $2.5 \times 10^7$ Pa, $3.0 \times 10^7$ Pa, $3.5 \times 10^7$ Pa, and $4.0 \times 10^7$ Pa. It is more preferable that the tensile storage elastic modulus is $1.5 \times 10^7$ to $3.5 \times 10^7$ Pa.

(2) Polymer Matrix

A polymer matrix includes a (meth)acrylate-based resin. The (meth)acrylate-based resin is not particularly limited, as long as it is a resin which constitutes the polymer matrix, and includes a plasticizing component and a curing agent in the matrix. It is preferable that the (meth)acrylate-based resin has a benzene skeleton. An example of the (meth)acrylate-based resin includes a resin derived from a copolymer of a monofunctional (meth)acrylate monomer and a polyfunctional (meth)acrylate monomer. Both monomers are selected from monomers which can afford the organogel having the above-described viscoelasticity. As an index thereof, there is an SP value.

The SP value is a value calculated by the method of Fedors [Robert F. Fedors, Polymer Engineering and Science, 14, 147-154 (1974)]. The SP value δ can be calculated from the cohesive energy Ecoh [cal/mol] and the molar molecular volume V [cm$^3$/mol] of a substituent, using the following equation.

$$\delta = [\Sigma \mathrm{Ecoh}/\Sigma \mathrm{V}]^{1/2}$$

As a unit of the SP value, a unit "(cal/CM$^3$)$^{1/2}$" which has previously been used conventionally is used. This unit can be converted into SI unit "(MPa)$^{1/2}$" by the following equation: 1 (cal/cm$^3$)$^{1/2}$ = 2.05 (MP$_a$)$^{1/2}$.

In the case of a mixture of two or more kinds of components, the SP value is defined by the following equation.

$$\sum_{i=1}^{n} (\phi_i \delta_i)$$

(In the above-described equation, n represents the number of components constituting the mixture, $\delta_i$ represents the SP value of an i$^{th}$ component, and $\phi_i$ represents the weight composition ratio of an i$^{th}$ component).

In the present specification, as a unit of the SP value, "(cal/cm$^3$)$^{1/2}$" is used.

The SP value is preferably 9.5 to 11.5. A monomer in this range is well compatible with the plasticizing component having curability, and when polymerized, it can manifest the plasticizing effect on a skeleton of the organogel, and can improve an adhering force due to manifestation of a good tacking force and the anchoring effect. The SP value can take 9.5, 9.55, 9.6, 10, 10.5, 11, and 11.5. The SP value is more preferably 9.55 or more, and further preferably 9.6 or more. When the SP value is greater than 11.5, an internal cohesive force of the plasticizing component becomes too high, and a tacking force may be reduced.

It is preferable that a mixture of the monofunctional (meth)acrylate monomer and the polyfunctional (meth)acrylate monomer is in the range of the above-described SP value, and at least one of both monomers has a benzene skeleton. In addition, when a benzene skeleton is also present in a molecular structure of the plasticizing component, compatibility between the plasticizing component and a skeleton of the organogel is enhanced due to π-π interaction, and the plasticizing effect can be manifested better. The π-π interaction is a dispersion force which acts between aromatic rings of an organic compound molecule, and is also called stacking interaction. For example, since the aromatic compound takes a firm planar structure and delocalized electrons exist plentifully due to the π electron system, a London dispersion force is manifested particularly strong. Accordingly, as the number of π electrons is increased, a mutually attracting force can be enhanced more.

It is preferable that at least one of the monofunctional (meth)acrylate monomer and the polyfunctional (meth)acrylate monomer has an epoxy group. By existence of an epoxy group in a skeleton of the organogel, a plasticizing agent and a skeleton of the organogel are chemically bound at curing of a curable plasticizing component, and a stronger adhering force can be obtained.

Specific examples of the monofunctional (meth)acrylate monomer include:

aliphatic (meth)acryl-based monomers such as ethyl acrylate (SP value 8.89), ethyl methacrylate (SP value 8.88), n-butyl acrylate (SP value 8.82), n-butyl methacrylate (SP value 8.82), cyclohexyl acrylate (SP value 9.26), cyclohexyl methacrylate (SP value 9.22), 2-ethylhexyl acrylate (SP value 8.62), 2-ethylhexyl methacrylate (SP value 8.63), isobornyl acrylate (SP value 8.70), tetrahydrofurfuryl acrylate (SP value 9.62), tetrahydrofurfuryl methacrylate (SP value 9.54), 4-hydroxybutyl acrylate (SP value 11.64), 4-hydroxybutyl methacrylate (SP value 11.39), 2-hydroxyethyl acrylate (SP value 12.45), and 2-hydroxyethyl methacrylate (SP value 12.06);

(meth)acrylamide-based monomers such as N,N-dimethylacrylamide (SP value 10.6), N,N-diethylacrylamide (SP value 10.2), N-isopropylacrylamide (SP value 10.6), N-hydroxyethylacrylamide (SP value 14.4), and acrylamide (SP value 14.2);

N-vinylpyrrolidone (SP value 11.4), N-vinylcaprolactam (SP value 10.8), N-vinylacetamide (SP value 10.9), N-acryloylmorpholine (SP value 11.2), acrylonitrile (SP value 11.1);

(meth)acryl-based monomers having a benzene skeleton such as benzyl acrylate (SP value 10.14), benzyl methacrylate (SP value 10.03), phenoxyethyl acrylate (SP value 10.12), phenoxyethyl methacrylate (SP value 10.02), phenyl diethylene glycol acrylate (SP value 9.99), 2-hydroxy-3-phenoxypropyl acrylate (SP value 11.37), 2-hydroxy-3-phenoxypropyl methacrylate (SP value 11.19), methylphenoxyethyl acrylate (SP value 9.54), methylphenoxyethyl methacrylate (SP value 9.49), ethoxylated orthophenylphenol acrylate (SP value 10.08), 1,10-decanediol acrylate (SP value 9.34), and 1,9-nonanediol acrylate (SP value 9.39);

(meth)acryl-based monomers having an epoxy group such as glycidyl acrylate (SP value 9.91), glycidyl methacrylate (SP value 9.79), and 4-hydroxybutyl acrylate glycidyl ether (SP value 9.57);

In exemplification of the above-described monofunctional (meth)acrylate monomer, monomers having the SP value in the range of 9.5 to 11.5 can be used alone, or two or more kinds may be used by combining them. Additionally, monomers having the SP value of less than 9.5 or more than 11.5 can be used by adjusting the SP value of a mixture when two or more kinds are mixed, in the range of 9.5 to 11.5.

Specific examples of the polyfunctional (meth)acrylate monomer include bisphenol A-type diglycidyl ether acrylic acid adduct (SP value 11.4), bisphenol A-type diglycidyl ether methacrylic acid adduct (SP value 10.49), propylene glycol diglycidyl ether acrylic acid adduct (SP value 10.93), propylene glycol diglycidyl ether methacrylic acid adduct (SP value 10.75), tripropylene glycol diglycidyl ether acrylic acid adduct (SP value 10.43), tripropylene glycol diglycidyl ether methacrylic acid adduct (SP value 10.32), glycerin diglycidyl ether acrylic acid adduct (SP value 12.32), glycerin diglycidyl ether methacrylic acid adduct (SP value 12.01), ethoxylated bisphenol A diacrylate (EO amount 10 mol) (SP value 10.01), ethoxylated bisphenol A diacrylate (EO amount 30 mol) (SP value 9.99), phenyl glycidyl ether acrylate hexamethylene diisocyanate urethane prepolymer (SP value 10.75), phenyl glycidyl ether acrylate toluene diisocyanate urethane prepolymer (SP value 10.44), and the like. EO means ethylene oxide. These polyfunctional (meth)acrylate monomers can be used alone, or two or more kinds may be used by combining them.

(3) Plasticizing Component

The plasticizing components include the known epoxy resins which are generally used in epoxy resin adhesives.

Examples of the epoxy resin include a bisphenol-type epoxy resin such as bisphenol F-type and bisphenol A-type, a novolac-type epoxy resin, a biphenyl-type epoxy resin, a dicyclopentadiene-type epoxy resin, a naphthalene-type epoxy resin, a cyclohexane-type epoxy resin, a hydrogenated bisphenol A-type epoxy resin, a cyclohexene oxide-type epoxy resin, a glycidylamine-type epoxy resin, and the like. Among them, the bisphenol-type epoxy resin such as bisphenol F-type and bisphenol A-type, and the novolac-type epoxy resin are preferable since they are excellent in the balance between performance such as the adhesion strength, durability, impact resistance, and heat resistance, and the cost. The epoxy-based resin has the viscosity in the range of 500 to 30,000 mPa·s at a temperature of 25°C. In addition, the viscosity of the epoxy-based resin is a value obtained by measurement at a test temperature of 25°C, using a Brookfield-type rotational viscometer, according to JIS K 7117-1 (1999). The viscosity can take 500 mPa·s, 3,000 mPa·s, 10,000 mPa·s,15,000 mPa·s, 20,000 mPa·s,25,000 mPa·s,and 30,000 mPa·s,

Additionally, the above-described epoxy resin has a benzene skeleton. If there is also a benzene skeleton in a molecular structure of the monofunctional (meth)acrylate monomer and the polyfunctional (meth)acrylate monomer, compatibility between the epoxy resin and a skeleton of the organogel is enhanced due to the π-π interaction, and the plasticizing effect can be manifested better. The π-π interaction is a dispersion force which acts between aromatic rings of an organic compound molecule, and is also called stacking interaction. For example, since the aromatic compound takes a firm planar structure, and electrons which are delocalized due to the π electron system are exist plentifully, a London dispersion force can be manifested particularly strong. Accordingly, as the number of π electrons is increased, a mutually attracting force can be enhanced more.

It is preferable that the epoxy resin is contained in the plasticizing component at 75 to 95% by weight. When the content is less than 75% by weight, the adhesion strength may be reduced due to reduction in the elastic modulus. When the content is more than 95% by weight, contraction due to a thermal stress becomes great and adhesion durability may be deteriorated. The content can take 75% by weight, 77% by weight, 80% by weight, 85% by weight, 90% by weight, 92% by weight, and 95% by weight. The content is more preferably 80 to 90% by weight.

It is preferable that the organogel further having a glass transition temperature and the tensile storage elastic modulus (at 180°C) described in a column of various physical properties contains the following plasticizing component.

First, a liquid epoxy-based resin having a benzene skeleton is a resin having a plurality of epoxy groups.The organogel further includes, in addition to this resin, any of (1) an aliphatic polyfunctional liquid epoxy-based resin having the viscosity in the range of 1 to 10,000 mPa·s at a temperature of 25°C, and having a plurality of epoxy groups, and (2) a monofunctional liquid epoxy-based resin having the viscosity in the range of 1 to 10,000 mPa·s at a temperature of 25°C, and having one epoxy group. By including the resin(s) (1) and/or (2), it becomes possible to suppress contraction at curing, and also secure the sufficient adhesion strength after curing. Two viscosities can take 1 mPa·s, 10 mPa·s,100 mPa·s,1,000 mPa·s, 4,000 mPa·s, 8,000 mPa·s, and 10,000 mPa·s.

It is preferable that the aliphatic polyfunctional liquid epoxy-based resin is contained in the plasticizing component at 5 to 25% by weight. When the content is less than 5% by weight, the effect of thermal stress relaxation is not sufficient, and adhesion durability may be deteriorated. When the content is more than 25% by weight, the adhesion strength may be reduced due to reduction in the elastic modulus. The content can take 5% by weight, 10% by weight, 12% by weight, 14% by weight, 16% by weight, 18% by weight, 20% by weight, and 25% by weight. The content is more preferably 10 to 20% by weight.

It is preferable that the monofunctional liquid epoxy-based resin is contained in the plasticizing component at 5 to 25% by weight. When the content is less than 5% by weight, the effect of thermal stress relaxation is not sufficient, and adhesion durability may be deteriorated. When the content is more than 25% by weight, the adhesion strength may be reduced due to reduction in the elastic modulus. The content can take 5% by weight, 10% by weight, 12% by weight, 14% by weight, 16% by weight, 18% by weight, 20% by weight, and 25% by weight. The content is more preferably 10 to 20% by weight.

Examples of the aliphatic polyfunctional liquid epoxy-based resin include acyclic aliphatic polyol, diglycidyl ether of polyoxyalkylene polyol, and the like. Examples of the acyclic aliphatic polyol include 1,4-butanediol diglycidyl ether, 1,6-hexanediol diglycidyl ether, neopentyl glycol diglycidyl ether, polycaprolactone diol diglycidyl ether, and the like. Examples of the diglycidyl ether of polyoxyalkylene polyol include polyethylene glycol diglycidyl ether (repetition number of ethylene oxide unit: about 1 to 10), polypropylene glycol diglycidyl ether (repetition number of propylene oxide unit: about 1 to 10), and the like. These polyfunctional liquid epoxy-based resins can be used alone, or two or more kinds may be used by combining them.

Examples of the monofunctional liquid epoxy-based resin include methyl glycidyl ether, 2-ethylhexyl glycidyl ether, i-propyl glycidyl ether, n-butyl glycidyl ether, t-butyl glycidyl ether, 2-ethylhexyl glycidyl ether, decyl glycidyl ether, lauryl glycidyl ether, tetradecyl glycidyl ether, phenyl glycidyl ether, p-cresyl glycidyl ether, p-t-butylphenyl glycidyl ether, benzyl glycidyl ether, diethylene glycol-t-butyl ether glycidyl ether, diethylene glycol-2-ethylhexyl ether glycidyl ether, lauric acid glycidyl ester, and the like. These monofunctional liquid epoxy-based resins can be used alone, or two or more kinds may be used by combining them.

Further, the plasticizing component may include both the polyfunctional liquid epoxy-based resin and the monofunctional liquid epoxy-based resin.

(4) Curing Agent

A curing agent is not particularly limited, as long as it has reactivity with the above-described plasticizing component. In the curing agent, for example, a latent-type curing agent can be used. The latent-type curing agent means a curing agent which does not react with a reactive group such as an epoxy group up to a certain temperature, but when a temperature reaches an activation temperature by heating, reacts with the reactive group to cure the gel sheet. Since a pot life of the gel sheet can be improved by using the latent-type curing agent, preservation stability of an uncured gel sheet before heating can be improved. Examples of the latent-type curing agent include when the reactive group is an epoxy group, curing agents (latent curing agent for epoxy resin) such as a neutral salt or a complex of an acidic or basic compound, a block compound, a high melting point body, and a microencapsulated material, which can react with the group to cure the plasticizing component. Examples of the latent-type curing agent include an amine-based curing agent, a phenol-based curing agent, an imidazole-based curing agent, an acid anhydride-based curing agent, and the like. More specifically, examples thereof include dicyandiamide, a hydrazide-based curing agent, an amine adduct-based curing agent, an imidazole-based curing agent, and the like.

Additionally, when dicyandiamide is used as the curing agent, amine-based and imidazole-based compounds and derivatives thereof can be used as a curing accelerator. Examples of the amine-based compound include 3-(3,4-dichlorophenyl)-N,N-dimethylurea (DCMU), and examples of the imidazole-based compound include 2,4-diamino-6-[2'-methylimidazolyl-(1')]-ethyl-s-triazine (2MZA).

(5) Content Ratio of Respective Components

It is preferable that the polymer matrix is contained at 10 to 30 parts by weight based on 100 parts by weight of the plasticizing component. When the content is less than 10 parts by weight, cohesiveness of the gel sheet is deteriorated, and shape retainability may be deteriorated. When the content is more than 30 parts by weight, the storage modulus is increased, the gel sheet cannot be deformed well, and adherence may be deteriorated. The content can take 10 parts by weight, 12 parts by weight, 15 parts by weight, 17 parts by weight, 20 parts by weight, 22 parts by weight, 25 parts by weight, 27 parts by weight, and 30 parts by weight. The more preferable content is 10 to 20 parts by weight.

The content of the curing agent can be appropriately set depending on a kind thereof. For example, when a curing agent of the catalyst reaction system such as an imidazole-based curing agent is used, the content thereof is preferably 1 to 20% by weight based on an amount of the plasticizing component. The content can take 1% by weight, 10% by weight, 12% by weight, 14% by weight, 16% by weight, 18% by weight, and 20% by weight. Additionally, when a curing agent which is equivalently reactive with an epoxy-based resin such as a phenol-based curing agent and an acid anhydride-based curing agent is used, the content thereof is preferably 0.8 to 1.2 equivalent, based on epoxy equivalent of the epoxy-based resin. The content can take 0.8 equivalent, 0.9 equivalent, 1 equivalent, 1.1 equivalent, and 1.2 equivalent.

(6) Reinforced Fiber Sheet

The gel sheet may be provided with a reinforced fiber sheet as a core material. Examples of a shape of the core material include a woven fabric, a knitted fabric, a non-woven fabric, a laminated fabric, a chopped strand mat, and the like. Examples of a constituent material of the core material include one or two or more kinds selected from reinforced fibers such as a polyester fiber, a polyamide fiber, an aramid fiber, a vinylon fiber, a carbon fiber, a glass fiber, and a polyolefin fiber. Additionally, in order to enhance fiber impregnability of the plasticizing component, it is preferable that the fiber has been treated with amine-based, epoxy-based, or methacryl-based silane coupling agent.

The reinforced fiber sheets may be positioned in the gel sheet and/or on a surface of the gel sheet, or may exist uniformly throughout the gel sheet in admixture thereof.

(7) Others

A silane coupling agent may be contained in the gel sheet. Since by containing the silane coupling agent, wettability of an interface between the resulting gel sheet and an adherend can be improved, the adhesion strength can be improved more.

If necessary, (for example, when used for outdoor use or the like), the additives which are known in the art, such as a stabilizer, a filler, a lubricant, a coloring agent, an ultraviolet absorbing agent, an antioxidant, an aging preventing agent, and a weathering stabilizer, may be contained in the gel sheet.

(Method for Manufacturing Tacky Gel Sheet)

The gel sheet can be manufactured by passing through a step of molding a polymerizable composition including a monomer mixture including a monofunctional (meth)acrylate monomer and a polyfunctional (meth)acrylate monomer for forming a polymer matrix, a polymerization initiator, a plasticizing component, and a curing agent into a sheet-like shape (molding step), and a step of polymerizing the monomer mixture in the polymerizable composition with the polymerization initiator (polymerization step). As the polymerization initiator, the known polymerization initiators corresponding to the energy such as heat, ultraviolet ray, and electron beam can be used. It is preferable that the monomer mixture has the SP value of 9.5 to 11.5, as described above. The monomer in this range is well compatible with the plasticizing component having curability, and when polymerized, can manifest the plasticizing effect in a skeleton of the organogel, and can improve an adhering force by manifestation of a good tacking force and the anchoring effect.

(1) Molding Step

Molding into a sheet-like shape is not particularly limited, but the known methods can be adopted. Examples thereof include a method of pouring a polymerizable composition into a mold form having a desired shape. Examples of another method include a method of pouring a polymerizable composition between two protective films comprising resin films, and retaining these at the certain thickness.

(2) Polymerization Step

The molded polymerizable composition becomes a gel sheet by polymerizing a monomer mixture therein. Examples of the polymerization include a free radical polymerization reaction, a living radical polymerization reaction, a living anion polymerization reaction, and the like. The above-described polymerization reaction can be initiated by giving the energy such as heat, ultraviolet ray, and electron beam.

(3) Other Step

When the gel sheet is provided with a reinforced fiber sheet as a core material, the core material can be made to be contained in the gel sheet, for example, as follows. Examples thereof include a method of arranging the reinforced fiber sheet in a mold form before, during, and after pouring, in a molding step, when a polymerizable composition is poured into the mold form. Additionally, an example thereof also includes a method of placing the reinforced fiber sheet on the gel sheet, and placing another gel sheet thereon, thereby, holding the reinforced fiber sheet with a pair of gel sheets.

(Method for Fixing a Pair of Adherends)

This fixing method includes a step of temporarily fixing a pair of adherends by tackily sticking the pair of adherends and the above-described gel sheet (temporal fixing step), and a step of fixing the pair of adherends by curing the gel sheet by heating the gel sheet before tacky adhesion or after tacky adhesion of the gel sheet (fixing step). The temporal fixing step utilizes a tacking force of the gel sheet, and the fixing step utilizes an adhering force of the gel sheet. The temporal fixing method and the fixing method are not particularly limited, but they can be appropriately conducted, depending on a kind of the pair of adherends.

The pair of adherends can be variously selected, and for example, a steel plate and a concrete structure may be selected. In this combination of adherends, there is an advantage that the concrete structure can be further strengthened. After temporal fixation, the steel plate and the concrete structure may be fixed more firmly by fixing the steel plate with an anchor bolt extending from the steel plate to reach the concrete structure. A gel sheet side of the steel plate may have been sand blast-treated in advance. Alternatively, after adhesion, an exposed portion of the steel plate may be subjected to rust proofing painting.

(Composite Material)

A composite material includes a pair of adherends, and an adhesive layer positioned between the pair of adherends, and the adhesive layer is derived from the above-described gel sheet.

EXAMPLES

The present invention will be explained further specifically below by way of examples, but the present invention is not limited by them at all. First, methods for measuring various physical properties to be measured in examples will be described.

(Viscoelastic Properties)

[Minimum Value of Storage Modulus G' at Heat Curing]

A minimum value of the storage modulus G' at heat curing is measured with a viscoelasticity measuring device PHYSICA MCR301 (manufactured by Anton Paar) and a temperature controlling system CTD450. A test piece of a discoid gel sheet having a diameter of 25 mm ($\pm$1 mm) and a thickness of 1 mm ($\pm$0.1 mm) is held with plates of the viscoelasticity measuring device at a measurement initiation temperature, and is adjusted at a measurement position of Normal Force 0.1 N. Further, after the test piece is retained at a measurement initiation temperature $\pm$ 1°C for 5 minutes, dynamic viscoelasticity measurement is performed in the range of 23°C to 120°C under the condition of a strain of 5%, a frequency of 10 Hz, a temperature raising rate of 5°C/min, a nitrogen atmosphere, a measurement interval of 30 seconds, and Normal Force 0 N constant, the storage modulus G' is measured, and a minimum value is read. In addition, for the plates, disposable $\phi$ 25 mm parallel disks and disposable dishes are used.

[Method for Measuring Storage Modulus G' and Loss Factor tan $\delta$]

The storage modulus G' and the loss factor tan $\delta$ are measured using a viscoelasticity measuring device PHYSICA MCR301 (manufactured by Anton Paar), a temperature controlling system CTD450, analysis software Rheoplus, and, for geometry, upper and lower lattice mesh-processed parallel plates of $\phi$ 8mm.

A discoid gel sheet test piece having a diameter of 10 mm and a thickness of 2 mm is held with plates of the viscoelasticity measuring device at a measurement temperature, and a distance between plates is adjusted so that Normal Force becomes 0.05 N. Further, a measurement temperature $\pm$1°C is held for 2 minutes, and a strain of 1%, a frequency of 0.1 to 100 Hz, a temperature condition of 23°C, a nitrogen atmosphere, and Normal Force IN constant are set.

Then, in the range of the frequency of 0.1 Hz to 100 Hz, measurement is performed from a high frequency (100 Hz) side. By performing dynamic viscoelasticity measurement under the condition of logarithmic rise and fall and the number of measurements of 5 points/digit, the storage modulus G' (Pa) and the loss factor tan $\delta$ are measured.

(Tacking Force Measurement: Probe Tack Test)

A gel sheet is cut into 3 $\times$ 3 cm, and fixed to a SUS plate which has been fixed with a double-sided tape (No. 5486 manufactured by Sliontech), with one surface of a gel sheet for measurement upward, using another surface thereof. In a probe tack test, measurement is performed using a texture analyzer TX-AT (manufactured by EKO Instruments). As a probe, a probe made of SUS having a diameter of 10 mm is used. At 23°C, after a load is applied to a tacky surface of the probe at a weight of the load of 1,000 g for 10 seconds, the probe is peeled at a rate of 10 mm/sec, and a maximum load (N) at that time is measured. A tacking force is a value (N/mm$^2$) obtained by dividing the maximum load (N) by an area of the tacky surface.

(Measurement of Adhering Force)

[Measurement of Tensile Shear Adhesion Strength]

A gel sheet is cut into a size of 25 $\times$ 12.5 mm, and among two peeling films provided on the gel sheet, one peeling film is peeled. After alcohol washing, the exposed gel sheet is crimped to a SPCC steel plate which has been abraded with a No. 240 abrasive paper described in JIS R 6252: 2006. Then, the other peeing film is peeled, and the exposed gel sheet is crimped to another SPCC steel plate which has been similarly pre-treated. This is retained in a blast-type oven at 120°C for 2 hours to heat and cure, and thereafter, the sheet is allowed to cool at an ambient temperature, and this is used as a test piece for measuring the tensile shear adhesion strength.

Then, after the test piece is conditioned over 16 hours under the standard atmosphere of JIS K 7100:1999, Symbol "23/50" (temperature 23°C, relative humidity 50%), Class 2, according to a procedure of JIS K 6850: 1999-7, using a tensile testing machine, a tensilon universal testing machine UCT-10T (manufactured by Orientec Co., Ltd.), and universal testing machine data processing software UTPS-458X (manufactured by Softbrain Co., Ltd.), the tensile shear adhesion strength (N/mm$^2$) is measured under the same standard atmosphere. However, a tension speed is 1.0 $\pm$ 0.2 (mm/min) in accordance with Japan Adhesive Industry Association Standards JAI-15: 2011.

The tensile shear adhesion strength (N/mm$^2$) is calculated by the following equation.

$$S=P/A$$

S: Tensile shear adhesion strength ($N/mm^2$)
P: Breaking force (N)
A: Shearing area ($mm^2$)

[Measurement of Tensile Adhesion Strength]

On an upper side of a mortar plate (70 × 70 × 20 mm) which has been molded in accordance with Section 10.4 "Method of Making Specimens" of JIS R 5201: 1997, a square notch of 40 × 40 mm having the depth of about 1 mm is formed. Of two peeling films provided on the gel sheet which has been cut into a square of 40 × 40 mm, one peeling film is peeled, and is adhered to an inner side of the notch of the mortar plate.

Then, the other peeling film is peeled, and a jig made of steel for pulling an upper portion in accordance with JSCE-K 531-2010 "Test Methods for Bond Strength of Surface Protective Materials" is applied to the exposed gel sheet. This is retained in a blast-type oven at 120°C for 2 hours to heat and cure the gel sheet, and thereafter, the sheet is allowed to cool at an ambient temperature, and used as a test piece for measuring the tensile adhesion strength.

The test piece is mounted in a tensile testing machine, a tensilon universal testing machine UCT-10T (manufactured by Orientec Co., Ltd.) using a dedicated jig in accordance with JSCE-K 531-2010. After conditioning over 16 hours under the standard atmosphere of JIS K 7100: 1999, Symbol "23/50" (temperature 23°C, relative humidity 50%), Class 2, according to a procedure of Section 4.1 of JSCE-K 531-2010, using universal testing machine data processing software UTPS-458X (manufactured by Softbrain Co., Ltd.), the tensile adhesion strength ($N/mm^2$) is measured under the same standard atmosphere. However, a tension speed is $0.5 \pm 0.1$ (mm/min).

The tensile adhesion strength ($N/mm^2$) is calculated by the following equation.

$$S = P/A$$

S: Tensile adhesion strength ($N/mm^2$)
P: Breaking force (N)
A: Shearing area ($mm^2$)

(Measurement of Glass Transition Temperature Tg and Tensile Storage Elastic Modulus E' of Cured Product)

A sample of a cured product is measured with a dynamic viscoelasticity measuring device (DMA) as follows. A sample which has been molded into a thickness of 1 mm, a length of 40 mm, and a width of 10 mm, and heated and cured at 120°C for 2 hours is used as a test piece. As a solid viscoelasticity measuring device, a viscoelasticity spectrometer EXSTAR DMS6100 (manufactured by SII Nano Technology Inc.) is used. The thickness and the width of the test piece are measured, and measurement is performed under the conditions of a frequency of 1 Hz, a temperature raising rate of 5°C/min, a measurement initiation temperature 20°C to a measurement finishing temperature 220°C, a chuck interval of 20 mm, the strain amplitude of 5 $\mu$m, minimum tensile force/compressive force of 100 mN, tensile force/compressive force gain of 1.5, and a force amplitude initial value of 100 mN under the nitrogen atmosphere in a tension control mode. Analysis is performed using analysis software attached to the device, and a maximum value of tan $\delta$ is defined as a glass transition temperature Tg [°C]. Additionally, the tensile storage elastic modulus E' [Pa] is defined as a value at 180°C. In addition, in measurement of the dimension of the test piece, "DIGIMATIC" CD-15 type manufactured by Mitutoyo Corporation is used.

(Example 1)

As raw materials for manufacturing a tacky adhesive composition, the following were used (part is part by weight).

Phenoxydiethylene glycol acrylate
(manufactured by KYOEISHA CHEMICAL Co., LTD: Light Acrylate P2HA): 4.5 parts
Bisphenol A diglycidyl ether acrylic acid adduct
(manufactured by SHOWA DENKO K.K.: Ripoxy SP-1509): 10.5 parts
2-Hydroxy-2-methyl-1-phenyl-propane-1-one
(Darocur1173 manufactured by BASF): 0.3 parts
Bisphenol A diglycidyl ether
(jER828 manufactured by Mitsubishi Chemical Corporation): 100 parts
Latent thermal curing agent

(Fujicure 7001 manufactured by T&K TOKA Corporation): 10 parts

An acryl monomer mixed solution in which a photopolymerization initiator Darocure 1173 is dissolved in bisphenol A diglycidyl ether acrylic acid adduct and phenoxydiethylene glycol acrylate was obtained. To this mixed solution were added bisphenol A diglycidyl ether and a latent thermal curing agent Fujicure 7001, thereafter, the mixture was sufficiently stirred and defoamed, thereby, a tacky adhesive composition was obtained. Then, on an easy peeling-treated surface of a peeling film (Toray Cerapeel MD (a) manufactured by TORAY ADVANCED FILM CO., LTD. (35 mm width, 38 $\mu$m PET)), a silicone rubber mold form of 130 $\times$ 130 $\times$ 2 mm thickness was formed. Into the mold form was poured and spread 20 g of the tacky adhesive composition. A chopped strand mat (MC-600a manufactured by Nitto Boseki Co., Ltd., weight per area = 600 g/m$^2$) of 130 $\times$ 130 mm was placed thereon, and further, 20 g of the tacky adhesive composition was poured from above it. Then, after the peeling film was placed on the tacky adhesive composition with an easy peeling-treated surface downward, the composition was impregnated while applying a pressure with a hand. Thereafter, UV irradiation was performed with a small UV polymerizing machine (J-cure 1500 manufactured by JATEC, metal halide lamp Model MJ-1500L) under the condition of a conveyer speed of 0.4 m/min and a distance between works of 150 mm, so that an accumulated light amount became about 7,500 mJ/cm$^2$, thereby, a gel sheet having the thickness of 2 mm was prepared.

Examples 2 to 11 and Comparative Examples 1 to 5

Gel sheets were prepared in the same manner as in Example 1, except that the raw materials for manufacturing the tacky adhesive composition were changed to those shown in Tables 1 and 2.

In addition, in Table, jER828 means a bisphenol A-type liquid epoxy resin, jER811 means a bisphenol A-type liquid epoxy resin (diluted type), jER604 means tetraglycidyl diaminodiphenylmethane, D.E.R.-431 means a novolac phenol-type liquid epoxy resin, and D.E.R.-337 means a bisphenol A-type semi-solid epoxy resin, and a bisphenol A-type diglycidyl ether acrylic acid adduct shows an SP value of 11.4, ethoxylated bisphenol A diacrylate (EO 10 mol) shows an SP value of 10.01, a glycerin diglycidyl ether acrylic acid adduct shows an SP value of 12.32, phenoxydiethylene glycol acrylate shows an SP value of 9.99, ethoxylated orthophenylphenol acrylate shows an SP value of 10.08, glycidyl methacrylate shows an SP value of 9.79, 4-hydroxybutyl acrylate glycidyl ether shows an SP value of 9.57, 2-hydroxyethyl acrylate shows an SP value of 12.45, and 2-ethylhexyl acrylate shows an SP value of 8.62.

Various physical properties of Examples 1 to 11 and Comparative Examples 1 to 5 are shown in Tables 3 and 4.

[Table 1]

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Tacky adhesive composition (part by weight) | Epoxy resin | jER828 | 100 | 100 | 75 | 100 | 100 | 100 | 100 | 75 | 50 | 50 | 100 |
| | | jER811 | | | 25 | | | | | | | 50 | |
| | | jER604 | | | | | | | | | 50 | | |
| | | D.E.R.-431 | | | | | | | | 25 | | | |
| | | D.E.R.-337 | | | | | | | | | | | |
| | Epoxy resin latent curing agent | Fujicure 7000 | | | | | | | | | 10 | | |
| | | Fujicure 7001 | 10 | 10 | 10 | 10 | 10 | 10 | 10 | 10 | | | |
| | | Amicure PN-23J | | | | | | | | | | 20 | |
| | | Fujicure FXR-1020 | | | | | | | | | | | 20 |
| | Polyfunctional (meth) acryl-based monomer | Bisphenol A-type diglycidyl ether acrylic acid adduct | 10.5 | 10.5 | 17.5 | | | 10.5 | | 10.5 | 10.5 | 10.5 | 10.5 |
| | | Ethoxylated bisphenol A diacrylate (EO 10mol) | | | | 7.5 | | | 7.5 | | | | |
| | | Glycerin diglycidyl ether acrylic acid adduct | | | | | 7.5 | | | | | | |
| | Monofunctional (meth) acryl-based monomer | Phenoxydiethylene glycol acrylate | 4.5 | 4.5 | 7.5 | | 7.5 | | | | 4.5 | 4.5 | 4.5 |
| | | Ethoxylated orthophenylphenol acrylate | | | | 7.5 | | | | | | | |
| | | Glycidyl methacrylate | | | | | | 4.5 | | | | | |
| | | 4-Hydroxybutyl acrylate glycidyl ether | | | | | | | 7.5 | 4.5 | | | |
| | SP value of monomer mixture [$(cal/cm^3)^{1/2}$] | | 10.98 | 10.98 | 10.98 | 10.04 | 11.15 | 11.00 | 9.79 | 10.85 | 10.98 | 10.98 | 10.98 |

14

EP 3 211 052 B1

(continued)

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 |
| | Photopolymerization initiator | DAROCURE1173 | 0.3 | 0.3 | 0.5 | 0.3 | 0.3 | 0.3 | 0.3 | 0.3 | 0.3 | 0.3 | 0.3 |
| | Silane coupling agent | 3-Glycidoxypropyltrimethoxysilane (KBM-403) | | 2 | 2 | 2 | 2 | 2 | 2 | 2 | 2 | 2 | 2 |
| Core material | Material | | Glass fiber chopped strand mat | | | | | | | | | | |
| | Weight per area | | 600 [g/m$^2$] | | | | | | | | | | |

[Table 2]

| | | | Comparative Example | | | | |
|---|---|---|---|---|---|---|---|
| | | | 1 | 2 | 3 | 4 | 5 |
| Tacky adhesive composition (part by weight) | Epoxy resin | jER828 | 100 | 100 | 100 | 100 | |
| | | D.E.R. -337 | | | | | 100 |
| | Epoxy resin latent curing agent | Fujicure 7001 | 10 | 10 | 10 | 10 | 10 |
| | Polyfunctional (meth)acryl-based monomer | Bisphenol A-type diglycidyl ether acrylic acid adduct | 3.5 | 28 | | | 10.5 |
| | | Ethoxylated bisphenol A diacrylate (EO 10mol) | | | | 7.5 | |
| | | Glycerin diglycidyl ether acrylic acid adduct | | | 10.5 | | |
| | Monofunctional (meth)acril-basedmonomer | Phenoxydiethylene glycol acrylate | 1.5 | 12 | | | |
| | | 4-Hydroxybutyl acrylate glycidyl ether | | | | | 4.5 |
| | | 2-Hydroxyethyl acrylate | | | 4.5 | | |
| | | 2-Ethylhexyl acrylate | | | | 7.5 | |
| | SP value of monomer mixture [(cal/cm$^3$)$^{1/2}$] | | 10.98 | 10.98 | 12.36 | 9.31 | 10.85 |
| | Photopolymerization initiator | DAROCURE1173 | 0.3 | 0.3 | 0.3 | 0.3 | 0.3 |
| | Silane coupling agent | 3-Glycidoxypropyltrimethoxysilane (KBM-403) | 2 | 2 | 2 | 2 | 2 |
| Core material | Material | | Glass fiber chopped strand mat | | | | |
| | Weight per area | | 600 [g/m$^2$] | | | | |

16

[Table 3]

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Assessment | Sheet thickness [mm] | | 2 | 2 | 2 | 2 | 2 | 2 | 2 | 2 | 2 | 2 | 2 |
| | Tacking force [N/mm$^2$] | | 0.125 | 0.114 | 0.089 | 0.132 | 0.101 | 0.076 | 0.125 | 0.116 | 0.097 | 0.103 | 0.138 |
| | Storage modulus G' [Pa] | 0.01Hz | $7.62 \times 10^3$ | $8.21 \times 10^3$ | $1.07 \times 10^4$ | $3.78 \times 10^3$ | $4.54 \times 10^3$ | $8.24 \times 10^3$ | $3.78 \times 10^3$ | $9.31 \times 10^3$ | $6.88 \times 10^3$ | $4.78 \times 10^4$ | $7.33 \times 10^3$ |
| | | 100Hz | $9.28 \times 10^5$ | $9.05 \times 10^5$ | $4.73 \times 10^6$ | $2.26 \times 10^5$ | $6.61 \times 10^5$ | $9.86 \times 10^5$ | $2.26 \times 10^5$ | $1.05 \times 10^6$ | $9.05 \times 10^5$ | $1.48 \times 10^6$ | $1.92 \times 10^6$ |
| | Loss factor (tan $\delta$) | 0.01Hz | 0.36 | 0.39 | 1.43 | 0.41 | 0.46 | 0.61 | 0.33 | 0.54 | 0.44 | 0.79 | 1.22 |
| | | 100Hz | 0.45 | 0.52 | 1.01 | 0.54 | 0.54 | 0.82 | 0.7 | 0.59 | 0.78 | 0.33 | 0.89 |
| | Minimum value of storage modulus G' at heat curing [Pa] | | 142 | 129 | 197 | 244 | 330 | 258 | 163 | 131 | 231 | 650 | 382 |
| | Tensile shear adhesion strength [N/mm$^2$] | | 8.28 | 9.75 | 7.21 | 6.95 | 5.21 | 9.11 | 11.02 | 10.88 | 12.31 | 4.54 | 4.87 |
| | Tensile adhesion strength [N/mm$^2$] | | 1.61 | 1.72 | 1.34 | 1.34 | 1.14 | 1.7 | 2.14 | 1.84 | 2.02 | 1.05 | 1.21 |

[Table 4]

| | | | Comparative Example | | | | |
|---|---|---|---|---|---|---|---|
| | | | 1 | 2 | 3 | 4 | 5 |
| Assessment | Sheet thickness [mm] | | 2 | 2 | 2 | 2 | 2 |
| | Tacking force [N/mm$^2$] | | 0.006 | 0.004 | 0.022 | 0.024 | 0.012 |
| | Storage modulus G' [Pa] | 0.01Hz | $1.22 \times 10^2$ | $18.98 \times 10^4$ | $2.02 \times 10^3$ | $5.17 \times 10^3$ | $8.04 \times 10^4$ |
| | | 100Hz | $2.46 \times 10^2$ | $1.21 \times 10^7$ | $4.72 \times 10^4$ | $7.65 \times 10^4$ | $9.17 \times 10^6$ |
| | Loss factor (tan$\delta$) | 0.01Hz | 0.12 | 1.34 | 0.14 | 0.39 | 1.21 |
| | | 100Hz | 0.13 | 1.05 | 0.67 | 0.56 | 0.97 |
| | Minimum value of storage modulus G' at heat curing [Pa] | | 6 | 5260 | 24 | 68 | 2880 |
| | Tensile shear adhesion strength [N/mm$^2$] | | 6.95 | 1.27 | 2.15 | 3.69 | 4.82 |
| | Tensile adhesion strength [N/mm$^2$] | | 1.41 | 0.32 | 0.87 | 0.79 | 0.95 |
| | Remark | | Resin sagging at curing | | | | |

From Tables 3 and 4, it is seen that a gel sheet having a high tacking force and adhering force, and having high shape maintainability can be provided by the fact that the organogel:

(i) includes a polymer matrix including a (meth)acrylate-based resin, a plasticizing component having curability, and a curing agent having reactivity with the plasticizing component, and
(ii) (1) has a storage modulus of $1.0 \times 10^3$ to $5.0 \times 10^4$ Pa and a loss factor of 0.01 to 2 (at a frequency of 0.01 Hz and at 23°C), and a storage modulus of $1.0 \times 10^4$ to $1.0 \times 10^7$ Pa and a loss modulus of 0.01 to 2 (at a frequency of 100 Hz and at 23°C) and (2) has a tacking force of 0.01 to 0.15 N/mm$^2$ (at 23°C) before curing, a tensile shear adhesion strength of 3 N/mm$^2$ or more (at 23°C) and a tensile adhesion strength of 1 N/mm$^2$ or more (at 23°C) after curing.

Examples 12 to 21 and Comparative Examples 6 and 7

Gel sheets were prepared in the same manner as in Example 1, except that the raw materials for manufacturing the tacky adhesive composition were changed to those shown in Tables 5 and 6. Table 5 shows values of Examples 2 and 9 as well.
In addition, in Tables, SR-4PG means polypropylene glycol diglycidyl ether, SR-16H means 1,6-hexanediol diglycidyl ether, SY-40M means a C12 and C14-mixed higher alcohol glycidyl ether mixture, SY-25L means a C10 and C12-mixed higher alcohol glycidyl ether mixture, PGE means phenyl glycidyl ether, jER828 means a bisphenol A-type liquid epoxy resin, jER806 means a bisphenol F-type liquid epoxy resin, jER604 means tetraglycidyl diaminodiphenylmethane, and IRGACURE OXE 01 means 1,2-octanedione, 1-[4-(phenylthio)-, 2-(O-benzoyloxime)], and bisphenol A-type diglycidyl ether acrylic acid adduct shows an SP value of 11.4 and phenoxydiethylene glycol acrylate shows an SP value of 9.99.
Various physical properties of Examples 12 to 21 and Comparative Examples 6 and 7 are shown in Tables 7 and 8. Table 7 shows values of Examples 2 and 9 as well.

[Table 5]

| | | | Example | | | | | | | | | | | | |
|---|---|---|---|---|---|---|---|---|---|---|---|---|---|---|---|
| | | | 2 | 9 | 12 | 13 | 14 | 15 | 16 | 17 | 18 | 19 | 20 | 21 |
| Tacky adhesive composition (part by weight) | Benzene skeleton-containing polyfunctional epoxy resin | jER828 | 100 | 50 | 90 | 80 | 80 | 80 | 70 | 60 | 90 | 80 | 85 | 80 |
| | | jER806 | | | | | | | 20 | 35 | | | | |
| | | jER604 | | 50 | | | | | | | | | | |
| | Aliphatic polyfunctional epoxy resin | SR-4PG | | | | | | | | | 10 | 20 | | |
| | | SR-16H | | | | | | | | | | | 15 | 10 |
| | Monofunctional epoxy resin | SY-40M | | | 10 | 20 | | | 10 | 5 | | | | 10 |
| | | SY-25L | | | | | 20 | | | | | | | |
| | | PGE | | | | | | 20 | | | | | | |
| | Epoxy resin latent curing agent | Fujicure 7000 | | 10 | | | | | | | | | | |
| | | Fujicure 7001 | 10 | | | | | | | | | | | |
| | | Fujicure FXR-1081 | | | 10 | 10 | 10 | 10 | 10 | 10 | 10 | 10 | 10 | 10 |
| | Polyfunctional (meth) acryl-based monomer | Bisphenol A-type diglycidyl ether acrylic acid adduct | 10.5 | 10.5 | 10.5 | 10.5 | 10.5 | 10.5 | 10.5 | 10.5 | 10.5 | 10.5 | 10.5 | 10.5 |
| | Monofunctional (meth) acryl-based monomer | Phenoxydiethylene glycol acrylate | 4.5 | 4.5 | 4.5 | 4.5 | 4.5 | 4.5 | 4.5 | 4.5 | 4.5 | 4.5 | 4.5 | 4.5 |
| | SP value of monomer mixture $[(cal/cm^3)^{1/2}]$ | | 10.98 | 10.98 | 10.98 | 10.98 | 10.98 | 10.98 | 10.98 | 10.98 | 10.98 | 10.98 | 10.98 | 10.98 |
| | Photopolymerization initiator | DAROCURE1173 | 0.3 | 0.3 | | | | | | | | | | |
| | | IRGACURE OXE01 | | | 0.3 | 0.3 | 0.3 | 0.3 | 0.3 | 0.3 | 0.3 | 0.3 | 0.3 | 0.3 |

EP 3 211 052 B1

19

(continued)

| | | | Example | | | | | | | | | | | |
| | | 2 | 9 | 12 | 13 | 14 | 15 | 16 | 17 | 18 | 19 | 20 | 21 |
| Silane coupling agent | 3-Glycidoxypropyltrimethoxysilane (KBM-403) | 2.0 | 2.0 | | | | | | | | | | |
| | 3-Glycidoxypropyltriethoxysilane (KBE-403) | | | 1.5 | 1.5 | 1.5 | 1.5 | 1.5 | 1.5 | 1.5 | 1.5 | 1.5 | 1.5 |
| Core material | Material | Glass fiber chopped strand mat | | | | | | | | | | | |
| | Weight per area | 600 [g/m²] | | | | | | | | | | | |

[Table 6]

| | | | Comparative Example | |
|---|---|---|---|---|
| | | | 6 | 7 |
| Tacky adhesive composition (part by weight) | Benzene skeleton-containing polyfunctional epoxy resin | jER828 | 65 | 70 |
| | Aliphatic polyfunctional epoxy resin | SR-4PG | | 30 |
| | Monofunctional epoxy resin | SY-40M | 35 | |
| | Epoxy resin latent curing agent | Fujicure FXR-1081 | 10 | 10 |
| | Polyfunctional | Bisphenol A-type diglycidyl ether acrylic acid adduct | 10.5 | 10.5 |
| | Monofunctional | Phenoxydiethylene glycol acrylate | 4.5 | 4.5 |
| | SP value of monomer mixture [(cal/cm$^3$)$^{1/2}$] | | 10.98 | 10.98 |
| | Photopolymerization initiator | IRGACURE OXE01 | 0.3 | 0.3 |
| | Silane coupling agent | 3-Glycidoxypropylethoxysilane (KBE-403) | 1.5 | 2 |
| Core material | Material | | Glass fiber chopped strand mat | |
| | Weight per area | | 600 [g/m$^2$] | |

[Table 7]

| | | | Example | | | | | | | | | | | |
|---|---|---|---|---|---|---|---|---|---|---|---|---|---|---|
| | | | 2 | 9 | 12 | 13 | 14 | 15 | 16 | 17 | 18 | 19 | 20 | 21 |
| Assessment | Sheet thickness [mm] | | 2 | 2 | 2 | 2 | 2 | 2 | 2 | 2 | 2 | 2 | 2 | |
| | Tacking force [N/mm$^2$] | | 0.114 | 0.097 | 0.051 | 0.046 | 0.048 | 0.068 | 0.048 | 0.055 | 0.071 | 0.081 | 0.075 | 0.068 |
| | Storage modulus G' [Pa] | 0.01Hz | $8.21 \times 10^3$ | $6.88 \times 10^3$ | $7.91 \times 10^3$ | $3.21 \times 10^3$ | $3.45 \times 10^3$ | $5.36 \times 10^3$ | $7.43 \times 10^3$ | $7.71 \times 10^3$ | $5.66 \times 10^3$ | $5.35 \times 10^3$ | $7.31 \times 10^3$ | $6.22 \times 10^3$ |
| | | 100Hz | $9.05 \times 10^5$ | $9.05 \times 10^5$ | $4.90 \times 10^5$ | $3.82 \times 10^5$ | $4.02 \times 10^5$ | $4.51 \times 10^5$ | $4.50 \times 10^5$ | $4.71 \times 10^5$ | $5.38 \times 10^5$ | $4.16 \times 10^5$ | $5.66 \times 10^5$ | $5.73 \times 10^5$ |
| | Loss factor (tan $\delta$) | 0.01Hz | 0.39 | 0.54 | 0.62 | 0.56 | 0.59 | 0.55 | 0.62 | 0.51 | 0.39 | 0.66 | 0.57 | 0.62 |
| | | 100Hz | 0.52 | 0.59 | 0.35 | 0.36 | 0.4 | 0.43 | 0.42 | 0.38 | 0.52 | 0.58 | 0.46 | 0.49 |
| | Minimum value of storage modulus G' at heat curing [Pa] | | 129 | 131 | 85 | 61 | 72 | 90 | 80 | 83 | $10^5$ | 96 | 92 | 87 |
| | Tensile shear adhesion strength [N/mm$^2$] | | 8.28 | 12.31 | 7.23 | 10.55 | 10.11 | 9.62 | 9.62 | 9.56 | 7.03 | 7.81 | 8.18 | 7.02 |
| | Tensile adhesion strength [N/mm$^2$] | | 1.61 | 2.02 | 2.35 | 1.74 | 1.84 | 1.89 | 2.22 | 1.95 | 2.06 | 1.78 | 2.07 | 1.97 |
| | Glass transition temperature Tg of cured product [°C] | | 109.2 | 116.3 | 65.2 | 45.7 | 44.6 | 73.7 | 58.4 | 77.1 | 76.2 | 52.9 | 72.3 | 48.7 |
| | Tensile storage elastic modulus E' of cured product [Pa] | | $5.69 \times 10^7$ | $7.24 \times 10^7$ | $3.06 \times 10^7$ | $1.95 \times 10^7$ | $2.01 \times 10^7$ | $3.55 \times 10^7$ | $3.13 \times 10^7$ | $3.86 \times 10^7$ | $3.13 \times 10^7$ | $2.49 \times 10^7$ | $2.98 \times 10^7$ | $3.01 \times 10^7$ |

[Table 8]

| Assessment | | | Comparative Example | |
|---|---|---|---|---|
| | | | 6 | 7 |
| | Sheet thickness [mm] | | 2 | 2 |
| | Tacking force [N/mm$^2$] | | 0.021 | 0.031 |
| | Storage modulus G' [Pa] | 0.01Hz | $0.84 \times 10^2$ | $0.67 \times 10^2$ |
| | | 100Hz | $9.45 \times 10^4$ | $1.06 \times 10^5$ |
| | Loss factor (tan $\delta$) | 0.01Hz | 0.55 | 0.67 |
| | | 100Hz | 0.43 | 0.49 |
| | Minimum value of storage modulus G' at heat curing [Pa] | | 25 | 27 |
| | Tensile shear adhesion strength [N/mm$^2$] | | 3.84 | 5.12 |
| | Tensile adhesion strength [N/mm$^2$] | | 0.96 | 0.88 |
| | Glass transition temperature Tg of cured product [°C] | | 33.5 | 38 |
| | Tensile storage elastic modulus E' of cured product [Pa] | | $8.76 \times 10^6$ | $1.21 \times 10^7$ |

From Tables 7 and 8, it is seen that since contraction at curing can be suppressed, and the sufficient adhesion strength can also be secured after curing, by that the organogel further has a glass transition temperature of 40 to 90°C and the tensile storage elastic modulus of $1.0 \times$ to $4.0 \times 10^7$ Pa (at 180°C), after curing, adhesion durability can be improved. Additionally, it is seen that since this organogel has stable shape retainability in the wide temperature region, workability can be improved without causing resin sagging.

Examples 22 to 24

Gel sheets were prepared in the same manner as in Example 1, except that the raw materials for manufacturing the tacky adhesive composition were changed to those shown in Table 9. Table 9 shows values of Examples 2 and 9 as well.

In addition, in Table, SR-4PG means polypropylene glycol diglycidyl ether, jER828 means a bisphenol A-type liquid epoxy resin, jER806 means a bisphenol F-type liquid epoxy resin, jER604 means tetraglycidyl diaminodiphenylmethane, and Curezol 2MZA means 2,4-diamino-6-[2'-methylimidazolyl-(1')]-ethyl-s-triazine, and a bisphenol A-type diglycidyl ether acrylic acid adduct shows an SP value of 11.4 and phenoxy diethylene glycol acrylate shows an SP value of 9.99.

Various physical properties of Examples 22 to 24 are shown in Table 10. Table 10 shows values of Examples 2 and 9 as well.

[Table 9]

| | | | Example | | | | |
|---|---|---|---|---|---|---|---|
| | | | 2 | 9 | 22 | 23 | 24 |
| Tacky adhesive composition (part by weight) | Benzene skeleton-containing polyfunctional epoxy resin | jER828 | 100 | 50 | 60 | 80 | 80 |
| | | jER806 | | | 35 | 20 | 20 |
| | | jER604 | | 50 | | | |
| | Aliphatic polyfunctional epoxy resin | SR-4PG | | | 5 | | |
| | Epoxy resin latent thermal curing agent | Fujicure 7000 | | 10 | | | |
| | | Fujicure 7001 | 10 | | | | |
| | | Fujicure FXR-1081 | | | 10 | | |
| | | Dicyandiamide | | | | 8 | 8 |
| | | Curezol 2MZA | | | | 3 | 3 |
| | Polyfunctional (meth)acryl-based monomer | Bisphenol A-type diglycidyl ether acrylic acid adduct | 10.5 | 10.5 | | | 10.5 |
| | | Phenyl glycidyl ether acrylate toluene diisocyanate urethane prepolymer | | | 10.5 | 2.5 | |
| | Monofunctional (meth)acryl-based monomer | Phenoxydiethylene glycol acrylate | 4.5 | 4.5 | 4.5 | 22.5 | 4.5 |
| | SP value of monomer mixture [(cal/cm$^3$)$^{1/2}$] | | 10.98 | 10.98 | 10.31 | 10.00 | 10.98 |
| | Photopolymerization initiator | DAROCURE 1173 | 0.3 | 0.3 | | | |
| | | IRGACURE OXE01 | | | 0.3 | 0.5 | 0.3 |
| | Silane coupling agent | 3-Glycidoxypropyltrimethoxysilane (KBM-403) | 2.0 | 2.0 | | | |
| Core material | Material | | Glass fiber chopped strand mat | | | | |
| | Weight per area | | 600 [g/m$^2$] | | | | |

[Table 10]

| | | Example | | | | |
|---|---|---|---|---|---|---|
| | | 2 | 9 | 22 | 23 | 24 |
| Assessment | Sheet thickness [mm] | 2 | 2 | 2 | 2 | 2 |
| | Tacking force [N/mm$^2$] | 0.114 | 0.097 | 0.107 | 0.142 | 0.095 |
| | Storage modulus G' [Pa] | 0.01Hz | $8.21 \times 10^3$ | $6.88 \times 10^3$ | $6.24 \times 10^3$ | $1.31 \times 10^3$ | $5.22 \times 10^3$ |
| | | 1100Hz | $9.05 \times 10^5$ | $9.05 \times 10^5$ | $8.05 \times 10^5$ | $3.66 \times 10^5$ | $6.13 \times 10^5$ |
| | Loss factor (tan $\delta$) | 0.01Hz | 0.39 | 0.54 | 0.41 | 0.78 | 0.61 |
| | | 100Hz | 0.52 | 0.59 | 0.53 | 0.68 | 0.52 |
| | Minimum value of storage modulus G' at heat curing [Pa] | 129 | 131 | 107 | 250 | 119 |
| | Tensile shear adhesion strength [N/mm$^2$] | 8.28 | 12.31 | 8.11 | 5.21 | 7.44 |
| | Tensile adhesion strength [N/mm$^2$] | 1.61 | 2.02 | 1.99 | 1.11 | 1.96 |

From Table 10, it is seen that even when a substance other than Fujicure is used as the epoxy resin latent thermal curing agent, adhesion durability can be improved, and workability can be improved without causing resin sagging.

**Claims**

1.   A tacky gel sheet having adhesive uses, comprising an organogel having tackiness before curing and having adhesiveness after curing to an adherend, wherein
said organogel

(i) comprises a polymer matrix including a (meth)acrylate-based resin, a plasticizing component having curability, and a curing agent having reactivity with said plasticizing component, and
(ii) (1) has a viscoelastic property expressed by a tensile storage modulus of $1.0 \times 10^3$ to $5.0 \times 10^4$ Pa and a loss factor of 0.01 to 2 (at a frequency of 0.01 Hz and at 23°C), and a storage modulus of $1.0 \times 10^4$ to $1.0 \times 10^7$ Pa and a loss factor of 0.01 to 2 (at a frequency of 100 Hz and at 23°C) and (2) has a tacking force of 0.01 to 0.15 N/mm$^2$ (at 23°C) before curing, a tensile shear adhesion strength of 3 N/mm$^2$ or more (at 23°C) and a tensile adhesion strength of 1 N/mm$^2$ or more (at 23°C) after curing,

wherein said plasticizing component comprises a liquid epoxy-based resin having a viscosity in a range of 500 to 30,000 mPa•s at a temperature of 25°C, JIS K 7117-1, 1999, and having a benzene skeleton, and
wherein said liquid epoxy-based resin having a benzene skeleton has a plurality of epoxy groups, and said plasticizing component further comprises one or both of (1) an aliphatic polyfunctional liquid epoxy-based resin having a viscosity in a range of 1 to 10,000 mPa•s at a temperature of 25°C and having a plurality of epoxy groups, and (2) a monofunctional liquid epoxy-based resin having a viscosity in a range of 1 to 10,000 mPa•s at a temperature of 25°C and having one epoxy group.

2.   The tacky gel sheet according to claim 1, wherein said curing agent is a latent curing agent for epoxy resin.

3.   The tacky gel sheet according to claim 1, wherein said (meth)acrylate-based resin has a benzene skeleton.

4.   The tacky gel sheet according to claim 1, wherein said polymer matrix is contained at 10 to 30 parts by weight based on 100 parts by weight of said plasticizing component.

5.   The tacky gel sheet according to claim 1, wherein said tacky gel sheet comprises said organogel having a thickness of 0.5 to 5 mm and a reinforced fiber sheet positioned in said organogel or on a surface of said organogel.

6. The tacky gel sheet according to claim 1, wherein said adherend is a concrete structure.

7. The tacky gel sheet according to claim 1, wherein said organogel further has a glass transition temperature of 40 to 90°C and a tensile storage elastic modulus of $1.0 \times 10^7$ to $4.0 \times 10^7$ Pa (at 180°C) after curing.

8. The tacky gel sheet according to claim 1, wherein said aliphatic polyfunctional liquid epoxy-based resin is contained in said plasticizing component at 5 to 25% by weight.

9. The tacky gel sheet according to claim 1, wherein said monofunctional liquid epoxy-based resin is contained in said plasticizing component at 5 to 25% by weight.

10. A method for manufacturing the tacky gel sheet according to claim 1, the method comprising the steps of:

molding into a sheet-like shape a polymerizable composition comprising a monomer mixture including a monofunctional (meth)acrylate monomer and a polyfunctional (meth)acrylate monomer for forming said polymer matrix, a polymerization initiator, a plasticizing component having curability, and a curing agent having reactivity with said plasticizing component; and

polymerizing the monomer mixture in said polymerizable composition with said polymerization initiator, wherein said plasticizing component comprises a liquid epoxy-based resin having a viscosity in a range of 500 to 30,000 mPa•s at a temperature of 25°C, (JIS K 7117-1, 1999, and having a benzene skeleton, and wherein said liquid epoxy-based resin having a benzene skeleton has a plurality of epoxy groups, and said plasticizing component further comprises one or both of (**1**) an aliphatic polyfunctional liquid epoxy-based resin having a viscosity in a range of 1 to 10,000 mPa•s at a temperature of 25°C and having a plurality of epoxy groups, and (2) a monofunctional liquid epoxy-based resin having a viscosity in a range of 1 to 10,000 mPa•s at a temperature of 25°C and having one epoxy group.

11. The method for manufacturing a tacky gel sheet according to claim 10, wherein said monomer mixture exhibits an SP value in a range of 9.5 to 11.5 $[(cal/cm^3)^{1/2}]$.

12. A method for fixing a pair of adherends, the method comprising the steps of:

temporarily fixing a pair of adherends by tackily adhering said pair of adherends and the tacky gel sheet according to claim 1; and
fixing said pair of adherends by curing the tacky gel sheet through heating said tacky gel sheet before or after tacky adhesion of said tacky gel sheet.

13. The method for fixing a pair of adherends according to claim 12, wherein said pair of adherends are a steel plate and a concrete structure.

14. A composite material comprising a pair of adherends and an adhesive layer positioned between said pair of adherends, wherein
said adhesive layer is derived from the tacky gel sheet according to claim 1.

**Patentansprüche**

1. Klebrige Gelfolie mit Haftmittelverwendungen, umfassend ein Organogel, das vor dem Härten klebrig ist und nach dem Härten ein Haftvermögen zu einer Klebefläche aufweist, worin

das Organogel

(i) eine Polymermatrix umfasst, die ein Harz auf (Meth)acrylatbasis, eine weichmachende Komponente mit Härtbarkeit und ein Härtungsmittel, das mit der weichmachenden Komponente reaktiv ist, umfasst, und
(ii) (1) eine viskoelastische Eigenschaft aufweist, die durch einen Zugspeichermodul von $1,0 \times 10^3$ bis $5,0 \times 10^4$ Pa und einen Verlustfaktor von 0,01 bis 2 (bei einer Frequenz von 0,01 Hz und bei 23°C) und einen Speichermodul von $1,0 \times 10^4$ bis $1,0 \times 10^7$ Pa und einen Verlustfaktor von 0,01 bis 2 (bei einer Frequenz von 100 Hz und bei 23°C) aufweist und (2) eine Klebkraft von 0,01 bis 0,15 N/mm$^2$ (bei 23°C) vor dem Härten, eine Zugscherhaftfestigkeit von 3 N/mm$^2$ oder mehr (bei 23°C) und eine Zughaftfestigkeit von 1 N/mm$^2$ oder mehr (bei 23°C) nach dem Härten aufweist,

worin die weichmachende Komponente ein flüssiges Harz auf Epoxybasis umfasst, das eine Viskosität in einem Bereich von 500 bis 30.000 mPa•s bei einer Temperatur von 25°C, JIS K 7117-1, 1999, und ein Benzolgerüst aufweist und
worin das flüssige Harz auf Epoxybasis, das ein Benzolgerüst aufweist, eine Vielzahl an Epoxygruppen hat und die weichmachende Komponente ferner eines oder beides umfasst aus (1) einem aliphatischen, polyfunktionalen, flüssigen Harz auf Epoxybasis, das eine Viskosität in einem Bereich von 1 bis 10.000 mPa•s bei einer Temperatur von 25°C und eine Vielzahl an Epoxygruppen aufweist, und (2) einem monofunktionalen, flüssigen Harz auf Epoxybasis, das eine Viskosität in einem Bereich von 1 bis 10.000 mPa•s bei einer Temperatur von 25°C und eine Epoxygruppe aufweist.

2. Klebrige Gelfolie gemäß Anspruch 1, worin das Härtungsmittel ein latentes Härtungsmittel für Epoxyharz ist.

3. Klebrige Gelfolie gemäß Anspruch 1, worin das Harz auf (Meth)acrylatbasis ein Benzolgerüst aufweist.

4. Klebrige Gelfolie gemäß Anspruch 1, worin die Polymermatrix basierend auf 100 Gewichtsteilen der weichmachenden Komponente in einer Menge von 10 bis 30 Gewichtsteilen enthalten ist.

5. Klebrige Gelfolie gemäß Anspruch 1, worin die klebrige Gelfolie das Organogel mit einer Dicke von 0,5 bis 5 mm und eine verstärkte Faserschicht umfasst, die in dem Organogel oder auf einer Oberfläche des Organogels angeordnet ist.

6. Klebrige Gelfolie gemäß Anspruch 1, worin die Klebefläche eine Betonstruktur ist.

7. Klebrige Gelfolie gemäß Anspruch 1, worin das Organogel ferner eine Glasübergangstemperatur von 40 bis 90°C und einen Zugelastizitätsspeichermodul von 1,0 x 10$^7$ bis 4,0 x 10$^7$ Pa (bei 180°C) nach dem Härten aufweist.

8. Klebrige Gelfolie gemäß Anspruch 1, worin das aliphatische, polyfunktionale, flüssige Harz auf Epoxybasis in der weichmachenden Komponente zu 5 bis 25 Gew.-% enthalten ist.

9. Klebrige Gelfolie gemäß Anspruch 1, worin das monofunktionale, flüssige Harz auf Epoxybasis in der weichmachenden Komponente zu 5 bis 25 Gew.-% enthalten ist.

10. Verfahren zur Herstellung der klebrigen Gelfolie gemäß Anspruch 1, das Verfahren umfassend die Schritte:

Formen einer polymerisierbaren Zusammensetzung, umfassend ein Monomergemisch, das ein monofunktionales (Meth)acrylatmonomer und ein polyfunktionales (Meth)acrylatmonomer zum Bilden der Polymermatrix enthält, einen Polymerisationsinitiator, eine weichmachende Komponente mit Härtbarkeit und ein Härtungsmittel, das mit der weichmachenden Komponente reaktiv ist, in eine folienartige Form; und
Polymerisieren des Monomergemischs in der polymerisierbaren Zusammensetzung mit dem Polymerisations initiator,
worin die weichmachende Komponente ein flüssiges Harz auf Epoxybasis umfasst, das eine Viskosität in einem Bereich von 500 bis 30.000 mPa•s bei einer Temperatur von 25°C, JIS K 7117-1, 1999, und ein Benzolgerüst aufweist, und
worin das flüssige Harz auf Epoxybasis, das ein Benzolgerüst aufweist, eine Vielzahl an Epoxygruppen aufweist und die weichmachende Komponente ferner eines oder beides umfasst aus (1) einem aliphatischen, polyfunktionalen, flüssigen Harz auf Epoxybasis, das eine Viskosität in einem Bereich von 1 bis 10.000 mPa•s bei einer Temperatur von 25°C und eine Vielzahl an Epoxygruppen aufweist, und (2) einem monofunktionalen, flüssigen Harz auf Epoxybasis, das eine Viskosität in einem Bereich von 1 bis 10.000 mPa•s bei einer Temperatur von 25°C und eine Epoxygruppe aufweist.

11. Verfahren zur Herstellung einer klebrigen Gelfolie gemäß Anspruch 10, worin das Monomergemisch einen SP-Wert in einem Bereich von 9,5 bis 11,5 [(cal/cm$^3$)$^{1/2}$] aufweist.

12. Verfahren zum Fixieren eines Klebeflächenpaares, das Verfahren umfassend die Schritte:

temporäres Fixieren eines Klebeflächenpaares durch klebriges Anhaften des Klebeflächenpaares und der klebrigen Gelfolie gemäß Anspruch 1; und

Fixieren des Klebeflächenpaares durch Härten der klebrigen Gelfolie mittels Erwärmens der Gelfolie vor oder nach dem klebrigen Anhaften der klebrigen Gelfolie.

**13.** Verfahren zum Fixieren eines Klebeflächenpaares gemäß Anspruch 12, worin das Klebeflächenpaar eine Stahlplatte und eine Betonstruktur sind.

**14.** Verbundmaterial, umfassend ein Klebeflächenpaar und eine Adhäsivschicht, die zwischen dem Klebeflächenpaar angeordnet ist, worin

die Adhäsivschicht von der klebrigen Gelfolie gemäß Anspruch 1 stammt.

## Revendications

**1.** Feuille de gel collant ayant des utilisations d'adhésif, comprenant un organogel ayant une pégosité avant durcissement et ayant une adhésivité après durcissement à un adhéré, dans laquelle

ledit organogel

(i) comprend une matrice polymère incluant une résine à base de (méth)acrylate, un composant plastifiant ayant une aptitude au durcissement, et un agent de durcissement ayant une réactivité avec ledit composant plastifiant, et

(ii) (1) présente une propriété viscoélastique exprimée par un module de conservation en traction de $1,0 \times 10^3$ à $5,0 \times 10^4$ Pa et un facteur de perte de 0,01 à 2 (à une fréquence de 0,01 Hz et à 23 °C), et un module de conservation de $1,0 \times 10^4$ à $1,0 \times 10^7$ Pa et un facteur de perte de 0,01 à 2 (à une fréquence de 100 Hz et à 23 °C) et (2) présente une force de collant de 0,01 à 0,15 N/mm² (à 23 °C) avant durcissement, une résistance d'adhérence au cisaillement en traction de 3 N/mm² ou plus (à 23 °C) et une résistance d'adhérence à la traction de 1 N/mm² ou plus (à 23 °C) après durcissement,

dans laquelle ledit composant plastifiant comprend une résine liquide à base d'époxy présentant une viscosité située dans une plage allant de 500 à 30 000 mPa.s à une température de 25 °C, JIS K 7117-1, 1999, et ayant un squelette benzénique, et

dans laquelle ladite résine liquide à base d'époxy ayant un squelette benzénique contient une pluralité de groupes époxy, et ledit composant plastifiant comprend en outre une ou les deux parmi (1) une résine aliphatique polyfonctionnelle liquide à base d'époxy présentant une viscosité située dans une plage allant de 1 à 10 000 mPa.s à une température de 25 °C et ayant une pluralité de groupes époxy, et (2) une résine monofonctionnelle liquide à base d'époxy présentant une viscosité située dans une plage allant de 1 à 10 000 mPa.s à une température de 25 °C et ayant un groupe époxy.

**2.** Feuille de gel collant selon la revendication 1, dans laquelle ledit agent de durcissement est un agent de durcissement latent pour résine époxy.

**3.** Feuille de gel collant selon la revendication 1, dans laquelle ladite résine à base de (méth)acrylate a un squelette benzénique.

**4.** Feuille de gel collant selon la revendication 1, dans laquelle ladite matrice polymère est contenue à hauteur de 10 à 30 parties en poids sur la base de 100 parties en poids dudit composant plastifiant.

**5.** Feuille de gel collant selon la revendication 1, dans laquelle ladite feuille de gel collant comprend ledit organogel ayant une épaisseur de 0,5 à 5 mm et une feuille de fibre de renforcement positionnée dans ledit organogel ou sur une surface dudit organogel.

**6.** Feuille de gel collant selon la revendication 1, dans laquelle ledit adhéré est une structure en béton.

**7.** Feuille de gel collant selon la revendication 1, dans laquelle ledit organogel présente en outre une température de transition vitreuse de 40 à 90 °C et un module d'élasticité de conservation en traction de $1,0 \times 10^7$ à $4,0 \times 10^7$ Pa (à 180 °C) après durcissement.

**8.** Feuille de gel collant selon la revendication 1, dans laquelle ladite résine aliphatique polyfonctionnelle liquide à base d'époxy est contenue dans ledit composant plastifiant à hauteur de 5 à 25 % en poids.

**9.** Feuille de gel collant selon la revendication 1, dans laquelle ladite résine monofonctionnelle liquide à base d'époxy est contenue dans ledit composant plastifiant à hauteur de 5 à 25 % en poids.

**10.** Procédé pour fabriquer la feuille de gel collant selon la revendication 1, le procédé comprenant les étapes de :

moulage en une forme de type feuille d'une composition polymérisable comprenant un mélange de monomères incluant un monomère de (méth)acrylate monofonctionnel et un monomère de (méth)acrylate polyfonctionnel pour former ladite matrice polymère, un initiateur de polymérisation, un composant plastifiant ayant une aptitude au durcissement, et un agent de durcissement ayant une réactivité avec ledit composant plastifiant ; et
polymérisation du mélange de monomères dans ladite composition polymérisable avec ledit initiateur de polymérisation,
dans lequel ledit composant plastifiant comprend une résine liquide à base d'époxy présentant une viscosité située dans une plage allant de 500 à 30 000 mPa.s à une température de 25 °C, JIS K 7117-1, 1999, et ayant un squelette benzénique, et
dans lequel ladite résine liquide à base d'époxy ayant un squelette benzénique contient une pluralité de groupes époxy, et ledit composant plastifiant comprend en outre une ou les deux parmi (1) une résine aliphatique polyfonctionnelle liquide à base d'époxy présentant une viscosité située dans une plage allant de 1 à 10 000 mPa.s à une température de 25 °C et ayant une pluralité de groupes époxy, et (2) une résine monofonctionnelle liquide à base d'époxy présentant une viscosité située dans une plage allant de 1 à 10 000 mPa.s à une température de 25 °C et ayant un groupe époxy.

**11.** Procédé pour fabriquer une feuille de gel collant selon la revendication 10, dans lequel ledit mélange de monomères présente une valeur SP située dans une plage allant de 9,5 à 11,5 $[(cal/cm^3)^{1/2}]$.

**12.** Procédé pour fixer une paire d'adhérés, le procédé comprenant les étapes de :

fixation temporaire d'une paire d'adhérés par l'adhérence par collage de ladite paire d'adhérés et de la feuille de gel collant selon la revendication 1 ; et
fixation de ladite paire d'adhérés par le durcissement de la feuille de gel collant par chauffage de ladite feuille de gel collant avant et après l'adhérence par collage de ladite feuille de gel collant.

**13.** Procédé pour fixer une paire d'adhérés selon la revendication 12, dans lequel ladite paire d'adhérés est une plaque d'acier et une structure en béton.

**14.** Matériau composite comprenant une paire d'adhérés et une couche adhésive positionnée entre ladite paire d'adhérés, dans lequel
ladite couche adhésive est dérivée de la feuille de gel collant selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI8218646 B
- JP HEI9158495 B

- WO 9700923 A

**Non-patent literature cited in the description**

- **ROBERT F. FEDORS.** *Polymer Engineering and Science,* 1974, vol. 14, 147-154